# EUROPÄISCHE PATENTSCHRIFT

(11) **EP 1 808 329 B1**
(45) Veröffentlichungstag und Bekanntmachung des Hinweises auf die Patenterteilung: **19.03.2014**
(21) Anmeldenummer: 07000225.8
(22) Anmeldetag: 08.01.2007
(51) Int. Cl.: B60N 2/06, B60N 2/24

(54) **Lagerung eines Fahrzeugsitzes**
Suspension for a vehicle seat
Stockage d 'un siège de véhicule

(30) Priorität: 12.01.2006 DE 102006001520
(43) Veröffentlichungstag der Anmeldung: 18.07.2007
(73) Patentinhaber: AB SKF, 415 50 Göteborg (SE)
(72) Erfinder: Rembold, Patrik, 97488 Stadtlauringen (DE); Edelmann, Ludwig, 97717 Sulzthal (DE); Jeschka, Erwin, 97711 Massbach (DE)
(74) Vertreter: Kohl, Thomas

(56) Entgegenhaltungen:
- JP-A- 60 067 233
- US-A- 5 857 832

## Beschreibung

Die Erfindung betrifft die Lagerung eines Fahrzeugsitzes.

Beispielsweise aus der DE 102 31 097 A1 ist ein Fahrzeugsitz mit einem Sitzkissen und einer Sitzlehne bekannt, wobei der Fahrzeugsitz in Fahrzeuglängs- und -querrichtung verlagerbar ist und zur Verlagerung in Fahrzeuglängsrichtung mindestens eine Unterschiene aufweist, auf der eine Oberschiene gleitet, die mit dem Sitzkissen verbunden ist, wobei der Mechanismus zur Verlagerung im Fahrzeugquerrichtung zwischen Sitzkissen und Oberschiene angeordnet ist.

Eine gattungsgemäße Lagerung eines Fahrzeugsitzes ist aus der JP-A-60067233 bekannt.

Eine Aufgabe der Erfindung ist es, eine verbesserte Lagerung eines Fahrzeugsitzes derart zu schaffen, so dass sich hinsichtlich dem Verlagern des Fahrzeugsitzes möglichst viele Freiheitsgrade ergeben.

Die Aufgabe wird durch den Gegenstand des Anspruchs 1 gelöst. Vorteilhafte Ausgestaltungen sind in den Unteransprüchen beschrieben.

Gemäß Anspruch 1 umfasst bei einer Lagerung eines Fahrzeugsitzes der über einen Mechanismus im Fahrzeuglängs- und -querrichtung verlagerbar und wenigstens verschwenkbar ist, der Mechanismus eine Linearführung, bei der zwei Teile gegeneinander längsverschieblich sind, und eine erste und eine zweite Drehverbindung, bei denen jeweils zwei Teile gegeneinander wenigstens verschwenkbar sind, wobei eines der Teile der Linearführung mit einem der Teile der ersten Drehverbindung und das andere der Teile der Linearführung mit einem der Teil der zweiten Drehverbindung verbunden ist.

Aus der Eingangs beschriebenen DE 102 31 097 A1 wird die Links-Rechts-Verlagerbarkeit sowie die Vorne-Hinten-Verlagerbarkeit des Fahrzeugsitzes durch zwei in etwa im rechten Winkel übereinander angeordnete Linearführungen realisiert. Die damit erzielbaren Verlagerungsbewegungen sind ebenso mit der erfindungsgemäßen Lagerung des Fahrzeugsitzes gemäß dem Anspruch 1 ausführbar, wobei dazu die beiden Drehverbindungen gegensinnig zueinander verschwenkt werden, einhergehend mit einer Längsverschiebung der Linearführung. Darüber hinaus ist aber mit der erfindungsgemäßen Lagerung des Fahrzeugsitzes gemäß Anspruch 1 der Fahrzeugsitz zusätzlich verschwenkbar, insbesondere verdrehbar, was von zusätzlichem Vorteil ist.

So erleichtert beispielsweise ein zur Fahrzeugtür hin verdrehter Fahrzeugsitz das Aus- und Einsteigen, was insbesondere für Senioren von besonderem Vorteil ist. Weiterhin können mit Vorteil zwei gegeneinander zum Fahrzeuginneren hin verdrehte Fahrzeugsitze die Kommunikation zweier Passagiere erleichtern. Dabei ist die erfindungsgemäße Lagerung des Fahrzeugsitzes mit besonderem Vorteil für im Fond eines Personenkraftwagens angeordnete Fahrzeugsitze einsetzbar. Schließlich entsprechen die mit der erfindungsgemäßen Lagerung des Fahrzeugsitzes gemäß Anspruch 1 ausführbaren Verlagerungs- und/oder Verschwenkbewegungen im hohen Maße den ergonomischen Anforderungen.

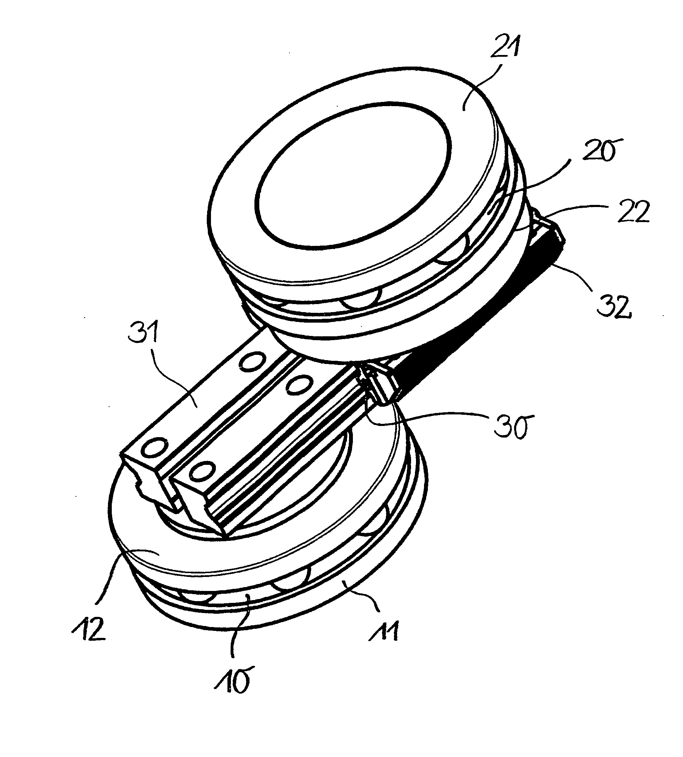

Weitere Vorteile, Merkmale und Einzelheiten der Erfindung ergeben sich aus dem im Folgenden beschriebenen Ausführungsbeispiel der Erfindung anhand der Figur.

Die Figur zeigt als ein Ausführungsbeispiel der Erfindung in perspektivischer Ansicht eine Lagerung eines Fahrzeugsitzes. Dabei umfasst die Lagerung eine erste Drehverbindung 10, eine Linearführung 30 und eine zweite Drehverbindung 20. Die Linearführung 30 umfasst dabei ein erstes Teil 31 und ein zweites Teil 32, die gegeneinander wälz- oder gleitlagertechnisch längsverschieblich sind. Die Drehverbindungen 10 und 20 umfassen erste Teile 11 und 21, die gegenüber zweiten Teilen 12 und 22, insbesondere durch zwischen den Teilen 11 und 12 bzw. 21 und 22 angeordnete Wälzkörper wenigstens verschwenkbar, insbesondere verdrehbar, sind.

Das erste Teil 11 der ersten Drehverbindung 10 ist dabei fest mit einem nicht dargestellten Boden und/oder Rahmen des Fahrzeugs verbunden. Der zweite Teil 12 der ersten Drehverbindung 10 ist fest mit dem ersten Teil 31 der Linearführung 30 verbunden. Das zweite Teil 32 der Linearführung 30 ist des weiteren fest mit dem zweiten Teil 22 der zweiten Drehverbindung 20 verbunden. Schließlich ist das erste Teil 21 der zweiten Drehverbindung 20 fest mit dem, aus Gründen der Übersichtlichkeit nicht dargestellten Fahrzeugsitz, verbunden. Mit dem vorausgehend beschriebenen Mechanismus ist der Fahrzeugsitz mit Vorteil in Fahrzeuglängs- und -querrichtung verlagerbar und wenigstens verschwenkbar, insbesondere verdrehbar.

### Bezugszeichenliste

- 10: erste Drehverbindung
- 11: erstes Teil der ersten Drehverbindung
- 12: zweites Teil der ersten Drehverbindung

- 20: zweite Drehverbindung
- 21: erstes Teil der zweiten Drehverbindung
- 22: zweites Teil der zweiten Drehverbindung

- 30: Linearführung
- 31: erstes Teil der Linearführung
- 32: zweites Teil der Linearführung

In nicht näher dargestellter Weise gehört dem Fahrzeugsitz eine Verriegelung zu, so dass der Fahrzeugsitz in unterschiedlichsten Verlagerungs- und/oder - Verschwenkpositionen verriegelbar ist. Dabei kann die Verriegelung derart ausgebildet sein, dass der Fahrzeugsitz in jeder beliebiger Position verriegelbar ist oder mit einer Art Rasterung ausgebildet sein, so dass der Fahrzeugsitz lediglich in einer vorgebbaren Anzahl von Positionen einrastbar verriegelt werden kann.

## Patentansprüche

1. Lagerung eines Fahrzeugsitzes, der über einen zwischen einem Boden und/oder einem Rahmen des Fahrzeugs und dem Fahrzeugsitz als solchen angeordneten Mechanismus in Fahrzeuglängs- und -querrichtung verlagerbar und wenigstens verschwenkbar ist, wobei der Mechanismus eine Linearführung (30), bei der ein erstes Teil (31) und ein zweites Teil (32) gegeneinander längsverschieblich sind, und sich das zweite Teil (32) beiderseits zweier, sich einander gegenüberliegender Seitenflächen des ersten Teils (31) erstreckend ausgebildet ist, und eine erste und eine zweite Drehverbindung (10, 20) umfasst, **gekennzeichnet dadurch, daß** bei der ersten und der zweiten Drehverbindung jeweils zwei Ringe (11, 12, 21, 22) gegeneinander wenigstens verschwenkbar sind, wobei eine Horizontalfläche des ersten Teils (31) fest mit einem der Ringe (12) der ersten Drehverbindung (10) verbunden ist, eine besagter Horizontalfläche gegenüberliegende Fläche des zweiten Teils (32) fest mit einem der Ringe (22) der zweiten Drehverbindung (20) verbunden ist und die anderen Ringe (11, 21) der beiden Drehverbindungen (10, 20) fest mit dem Boden und/oder dem Rahmen des Fahrzeugs und dem Fahrzeugsitz verbindbar sind.

2. Lagerung nach Anspruch 1, wobei wenigstens eine der Drehverbindungen (10, 20) derart ausgebildet ist, dass deren Ringe (11, 12, 21, 22) gegeneinander verdrehbar sind.

3. Lagerung nach einem der Ansprüche 1 oder 2, wobei wenigstens eine der Drehverbindungen (10, 20) und/oder die Linearführung (30) in Wälz- und/oder Gleitlagertechnik ausgebildet sind.

4. Lagerung nach einem der Ansprüche 1 bis 3, wobei dem Fahrzeugsitz eine Verriegelung zuordenbar ist, so dass der Fahrzeugsitz in verschiedenen Verlagerungs- und/oder Verschwenkpositionen verriegelbar ist.

5. Lagerung nach Anspruch 4, wobei die Verriegelung derart ausgebildet ist, das in jeder beliebigen Position verriegelbar ist.

6. Lagerung nach Anspruch 4, wobei die Verriegelung mit einer Rasterung ausgebildet ist, so dass in einer vorgebbaren Anzahl von Positionen verriegelbar ist.

7. Lagerung nach einem der Ansprüche 1 bis 6, wobei der Fahrzeugsitz als Rücksitz eines Personenkraftwagens ausbildbar ist.

## Claims

1. Suspension for a vehicle seat which is shiftable in the longitudinal and transverse directions of the vehicle and is at least pivotable via a mechanism arranged between a floor and/or a frame of the vehicle and the vehicle seat as such, wherein the mechanism comprises a linear guide (30), in which a first part (31) and a second part (32) are longitudinally displaceable in relation to each other, and the second part (32) is designed so as to extend on both sides of two mutually opposite side surfaces of the first part (31), and comprises a first and second rotary connection (10, 20), **characterized in that**, in the case of the first and the second rotary connection, two rings (11, 12, 21, 22) in each case are at least pivotable in relation to each other, wherein a horizontal surface of the first part (31) is fixedly connected to one of the rings (12) of the first rotary connection (10), a surface of the second part (32), which surface is opposite said horizontal surface, is fixedly connected to one of the rings (22) of the second rotary connection (20), and the other rings (11, 21) of the two rotary connections (10, 20) are fixedly connectable to the floor and/or the frame of the vehicle and to the vehicle seat.

2. Suspension according to Claim 1, wherein at least one of the rotary connections (10, 20) is designed in such a manner that the rings (11, 12, 21, 22) thereof are rotatable in relation to each other.

3. Suspension according to either of Claims 1 and 2, wherein at least one of the rotary connections (10, 20) and/or the linear guide (30) are/is designed by rolling-contact and/or plain bearing technology.

4. Suspension according to one of Claims 1 to 3, wherein a locking means can be assigned to the vehicle seat such that the vehicle seat is lockable in various displacement and/or pivoted positions.

5. Suspension according to Claim 4, wherein the locking means is designed in a manner so as to be lockable in any desired position.

6. Suspension according to Claim 4, wherein the locking means is formed with a latching mechanism so as to be lockable in a predeterminable number of positions.

7. Suspension according to one of Claims 1 to 6, wherein the vehicle seat can be formed as a rear seat of a passenger vehicle.

## Revendications

1. Support sur palier d'un siège de véhicule, qui peut être déplacé et au moins pivoté dans la direction longitudinale et transversale du véhicule par le biais d'un mécanisme disposé entre un fond et/ou un cadre du véhicule et le siège de véhicule proprement dit, le mécanisme comprenant un guide linéaire (30) dans lequel une première partie (31) et une deuxième partie (32) sont déplaçables longitudinalement l'une par rapport à l'autre et la deuxième partie (32) est réalisée de manière à s'étendre de part et d'autre de deux surfaces latérales de la première partie (31) opposées l'une à l'autre, et une première et une deuxième liaison rotative (10, 20), **caractérisé en ce que** dans le cas de la première et de la deuxième liaison rotative, à chaque fois deux bagues (11, 12, 21, 22) peuvent au moins pivoter l'une par rapport à l'autre, une surface horizontale de la première partie (31) étant connectée fixement à l'une des bagues (12) de la première liaison rotative (10), une surface de la deuxième partie (32) opposée à ladite surface horizontale étant connectée fixement à l'une des bagues (22) de la deuxième liaison rotative (20) et les autres bagues (11, 21) des deux liaisons rotatives (10, 20) pouvant être connectées fixement au fond et/ou au cadre du véhicule et au siège de véhicule.

2. Support sur palier selon la revendication 1, dans lequel au moins l'une des liaisons rotatives (10, 20) est réalisée de telle sorte que ses bagues (11, 12, 21, 22) puissent tourner l'une par rapport à l'autre.

3. Support sur palier selon l'une quelconque des revendications 1 ou 2, dans lequel au moins l'une des liaisons rotatives (10, 20) et/ou le guide linéaire (30) sont réalisés selon une technique de palier à roulement et/ou de palier lisse.

4. Support sur palier selon l'une quelconque des revendications 1 à 3, dans lequel le siège de véhicule peut être associé à un verrouillage de telle sorte que le siège de véhicule puisse être verrouillé dans différentes positions de déplacement et/ou de pivotement.

5. Support sur palier selon la revendication 4, dans lequel le verrouillage est réalisé de telle sorte que l'on puisse effectuer un verrouillage dans chaque position quelconque.

6. Support sur palier selon la revendication 4, dans lequel le verrouillage est réalisé avec un encliquetage de telle sorte que l'on puisse effectuer un verrouillage dans un nombre prédéfini de positions.

7. Support sur palier selon l'une quelconque des revendications 1 à 6, dans lequel le siège de véhicule peut être réalisé sous forme de siège arrière d'une automobile.
